(19) Europäisches Patentamt / European Patent Office / Office européen des brevets

(11) **EP 2 244 365 A1**

(12) **EUROPEAN PATENT APPLICATION**

(43) Date of publication:
**27.10.2010  Bulletin 2010/43**

(51) Int Cl.:
***H02M 3/07*** *(2006.01)*

(21) Application number: **09158623.0**

(22) Date of filing: **23.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicants:
• **Mitsubishi Electric R&D Centre Europe B.V.**
  **1119 NS  Schiphol Rijk (NL)**
  Designated Contracting States:
  **FR**
• **Mitsubishi Electric Corporation**
  **Tokyo 100-8310 (JP)**
  Designated Contracting States:
  **AT BE BG CH LI CY CZ DE DK EE ES FI GB GR HR HU IE IS IT LT LU LV MC MK MT NL NO PL PT RO SE SI SK TR**

(72) Inventors:
• **Buiatti, Gustavo**
  **35708, RENNES Cedex 7 (FR)**
• **Foube, Laurent**
  **35708, RENNES Cedex 7 (FR)**

(74) Representative: **Maillet, Alain**
  **Cabinet Le Guen Maillet**
  **5 Place Newquay**
  **B.P. 70250**
  **35802 Dinard Cedex (FR)**

(54) **Method and apparatus for discharging the capacitors of a boost converter composed of plural bridge devices**

(57)   The present invention concerns a method for discharging the capacitors of a boost converter composed of a number n of bridge devices connected in series, the boost converter is connected to electric direct current providing means, each bridge device is composed of plural switches and a capacitor. The method comprises the steps of setting the switches of the bridge devices in n-1 different configurations in order to discharge the capacitors of n-1 different bridge devices within n-1 consecutive periods of time.

Fig. 1a

EP 2 244 365 A1

**Description**

The present invention relates generally to a method and an apparatus for discharging the capacitors of a boost converter composed of plural bridge devices.

Classical DC/DC converters use inductors in order to convert a direct current from a first voltage to a second voltage which may be larger or smaller than the first voltage.

Inductors are used for storing energy in the form of magnetic field (current) and they have many drawbacks. Inductors are heavy, their cost is relatively important because they are mainly composed of copper material.

The combination of switches and capacitors in order to replace inductors has been already proposed.

For example, charge pumps, also known as DC/DC converters use capacitors as energy storage elements. When compared to inductive switching DC/DC converters, which also use inductors as energy storage elements, charge pumps offer unique characteristics that make them attractive for certain end-user applications.

When boost converters operate, the capacitors of the boost converters are charged.

In order to allow the setting of the boost converters to known initial conditions or for maintenance reasons, it is sometimes necessary to discharge the capacitors of the boost converters.

Because the capacitors can store a large amount of charge at relatively high DC voltages such as at 240 volts and higher, the capacitors must be discharged when the power source is removed or disconnected from the boost converter in order to comply with safety standards to prevent any capacitor from generating a shock hazard to a service man or an operator. The IEC 950 standard or CENELEC EN60950 requires the capacitors to be discharged to a safe charge level which is a voltage level of less than 2 volts.

One solution could be to add, to each capacitor, parallel resistors in order to enable the discharge of the capacitors.

Such solution is not satisfactory in terms of power losses and cost. The parallel resistors continually dissipate power during the normal operation of the boost converter resulting in wasted energy which appears as heat in the power system.

Also, according to the IEC 950 standard recommendations, the capacitors must reach the safe voltage level in a short time, either one second or ten seconds depending upon how the power is connected. Since boost converters make use of high capacitance values, the parallel resistors suited for respecting the IEC 950 standard will lead to high power losses as high resistor values cannot be compatible with the short discharge time requirements.

Finally, the high number of capacitors in the boost converter would call for the need of the same number of parallel resistors to be used, also resulting in an expensive and voluminous solution.

The present invention aims to provide a satisfactory solution in terms of power losses, volume and cost.

To that end, the present invention concerns a method for discharging the capacitors of a boost converter composed of a number n of bridge devices connected in series, the boost converter composed of n bridge devices being connected to electric direct current providing means, each bridge device being composed of plural switches and a capacitor, **characterised in that** the method comprises the steps of :

- setting the switches of the bridge devices in n-1 different configurations in order to discharge the capacitors of n-1 different bridge devices within n-1 consecutive periods of time.

The present invention concerns also an apparatus for discharging the capacitors of a boost converter composed of a number n of bridge devices connected in series, the boost converter composed of n bridge devices being connected to electric direct current providing means, each bridge device being composed of plural switches and a capacitor, **characterised in that** the apparatus comprises :

- means for setting the switches of the bridge devices in n-1 different configurations in order to discharge the capacitors of n-1 different bridge devices within n-1 consecutive periods of time.

Thus, it is possible to discharge the capacitors of the boost converter composed of n bridge devices without needing a discharge resistor for every capacitor.

The cost of the boost converter composed of n bridge devices is minimized as its size.

There is no danger when someone is in contact with the capacitors of the boost converter composed of n bridge devices.

Furthermore, at anytime, the voltage on the capacitors of the boost converter composed of n bridge devices can be controlled. It is then possible to set initial conditions when the boost converter composed of n bridge devices is put into operation.

According to a particular feature, the boost converter composed of n bridge devices further comprises an output stage composed of at least a diode, an output capacitor, a discharge resistor and a discharge switch and the switches of the bridge devices and the discharge switch are set in a $n^{th}$ configuration in order to discharge the output capacitor within a $n^{th}$ time period.

Thus, it is possible to discharge the output capacitor of the boost converter composed of n bridge devices without needing a dedicated resistor for the output capacitor.

The cost of the boost converter composed of n bridge devices is minimized as its size.

There is no danger when someone is in contact with the output capacitor.

According to a particular feature, the $n^{th}$ configuration further enables the discharge within the $n^{th}$ time period of the capacitor of the $n^{th}$ bridge device connected to the output stage.

Thus, it is possible to discharge the capacitor of the $n^{th}$ bridge device of the boost converter composed of n bridge devices without needing a dedicated resistor for the capacitor of the $n^{th}$ bridge device.

The cost of the boost converter composed of n bridge devices is minimized as its size.

There is no danger when someone is in contact with the capacitor of the $n^{th}$ bridge device.

According to a particular feature, the boost converter composed of n bridge devices further comprises an input stage composed of at least an input diode, an input capacitor and an input resistor, and the switches of the bridge devices and the discharge switch are set in a $(n+1)^{th}$ configuration in order to discharge the input capacitor within a $(n+1)^{th}$ time period.

Thus, it is possible to discharge the input capacitor of the boost converter composed of n bridge devices without needing a resistor dedicated to the input capacitor.

The cost of the boost converter composed of n bridge devices is minimized as its size.

There is no danger when someone is in contact with the input capacitor.

According to a particular feature, the $n^{th}$ configuration is set as first, followed by the $(n+1)^{th}$ configuration and followed by the other n-1 different configurations.

According to a particular feature, each switch of each bridge device is composed of a N-MOSFET transistor and its intrinsic body diode, the anode of the body diode is connected to the source of the N-MOSFET and the cathode of the body diode is connected to the drain of the N-MOSFET transistor.

According to a particular feature, the boost converter composed of n bridge devices further comprises a switch connecting the electric direct current providing means and the input stage and the switch connecting the electric direct current providing means and the input stage is in a non conducting state during the n+1 configurations.

Thus, the electric direct current providing means is not short circuited during the different configurations.

According to a particular feature, the electric direct current providing means are photovoltaic modules.

According to a particular feature, the boost converter composed of n bridge devices further comprises a switch connecting the photovoltaic modules and the input stage and the switch connecting the photovoltaic modules and the input stage is in conducting state during the n+1 configurations.

Thus, if photovoltaic modules without anti-parallel protection diodes are used, no additional device for the discharge process is needed.

According to a particular feature, the boost converter composed of n bridge devices further comprises a discharge circuit connected between the switch connecting the electric direct current providing means and the first bridge device, the discharge circuit being composed of a discharge diode and a second discharge resistor, the cathode of the discharge diode being connected to the input of the first bridge device, the anode of the discharge diode being connected to a first terminal of the second discharge resistor and the second terminal of the second discharge resistor being connected to the negative terminal of the electric direct current providing means.

Thus, there is a path for discharging at least one capacitor of the boost converter composed of n bridge devices when the electric direct current providing means are disconnected from the boost converter composed of n bridge devices and the voltage between the input of the first bridge device and the negative terminal of the electric direct current providing means becomes negative.

The characteristics of the invention will emerge more clearly from a reading of the following description of an example embodiment, the said description being produced with reference to the accompanying drawings, among which :

Fig. 1a represents a first example of a boost converter composed of three bridge devices and wherein the electric direct current providing means are photovoltaic modules without anti-parallel protection diodes;

Fig. 1b represents a second example of a boost converter composed of three bridge devices and wherein the electric direct current providing means are any kind of electric DC power sources ;

Fig. 2 represents an example of a device comprising a boost converter composed of n bridge devices;

Fig. 3 is an example of voltage values on the bridges of the boost converter composed of three bridges;

Fig. 4a is an example of an algorithm for discharging the capacitors of the boost converter composed of n for example equal to three, bridge devices described in the first example of boost converter ;

Fig. 4b is an example of an algorithm for discharging the capacitors of the boost converter composed of n for example equal to three, bridge devices described in the second example of boost converter;

Figs. 5 represent the voltage variations of the capacitors of the boost converter composed of three bridge devices during different periods of time for the first example of boost converter;

Fig. 6 represents the states of the switches of the boost converter composed of three bridge devices when at least one capacitor is discharged in the first configuration during the first period of time and for the first example of boost converter;

Fig. 7 represents the states of the switches of the boost converter composed of three bridge devices when at least one capacitor is discharged in the second configuration during the second period of time and for the first example of boost converter;

Fig. 8 represents the states of the switches of the boost converter composed of three bridge devices when at least one capacitor is discharged in the third configuration during the third period of time and for the first example of boost converter;

Fig. 9 represents the states of the switches of the boost converter composed of three bridge devices when at least one capacitor is discharged in the fourth configuration during the fourth period of time and for the first example of boost converter;

Figs. 10 represent the voltage variations of the capacitors of the boost converter composed of three bridge devices during different periods of time for the second example of boost converter.

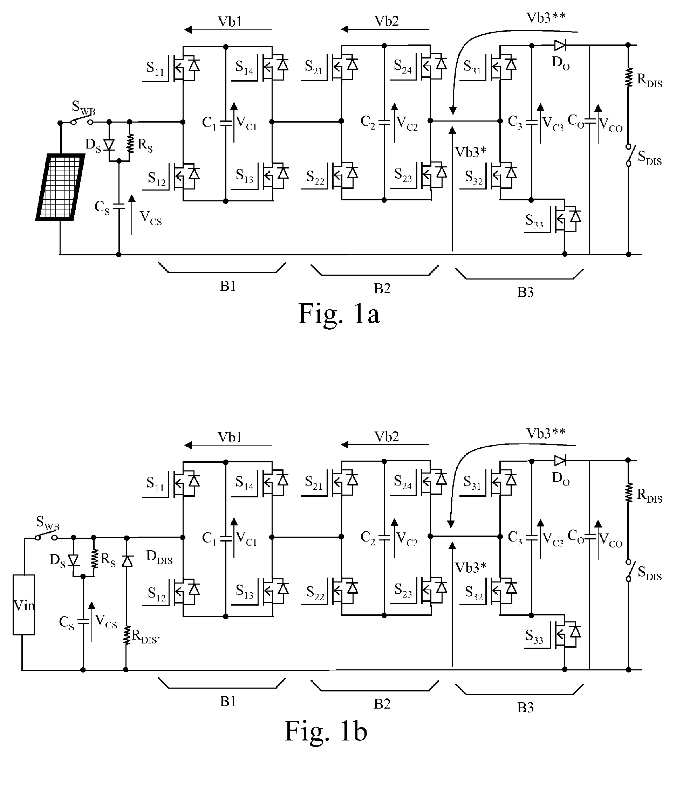

**Fig. 1a** represents a first example of a boost converter composed of three bridge devices (n=3) and wherein the electric direct current providing means are photovoltaic modules.

The boost converter composed of three bridge devices is also named Reactor Less Boost Converter (RLBC) or inductor less boost converter.

Basically, the inductor of the conventional DC/DC Boost converter is replaced by "n" bridge devices or bits connected in series. Each bridge device is composed of plural switches and a capacitor as shown in Fig. 1. It has to be noted here that two switches may be under the form of diodes acting as switches. This individual bridge structure is also named "bit".

In the Fig. 1, each switch $S_{11}$, $S_{12}$, $S_{13}$, $S_{14}$, $S_{21}$, $S_{22}$, $S_{23}$, $S_{24}$, $S_{31}$, $S_{32}$ and $S_{33}$ of each bridge device or bit B1, B2 and B3 is composed of a N-MOSFET transistor and its intrinsic body diode. The anode of the body diode is connected to the source of the N-MOSFET and the cathode of the body diode is connected to the drain of the N-MOSFET transistor.

In the Fig. 1, three bits B1, B2 and B3 are shown.

A boost converter composed of a more important number of bridge devices can be obtained by duplicating the bit B1 as much as necessary.

The bit B1 is composed of four switches $S_{11}$, $5_{12}$, $S_{13}$ and $S_{14}$ and one capacitor $C_1$.

The bit B2 is composed of four switches $S_{21}$, $S_{22}$, $S_{23}$ and $S_{24}$ and one capacitor $C_2$.

The bit B3 is composed of three switches $S_{31}$, $S_{32}$, $S_{33}$ and one capacitor $C_3$.

For each bit Bi with i=1 or 2, since n=3 (i=1 to n-1), the drain of the N-MOSFET transistor of $S_{i1}$ is connected to the positive terminal of the capacitor $C_i$ and to the drain of the N-MOSFET transistor of $S_{i4}$. The source of the N-MOSFET transistor of $S_{i1}$ is connected to the drain of the N-MOSFET transistor of $S_{i2}$. The source of the N-MOSFET transistor of $S_{i4}$ is connected to the drain of the N-MOSFET transistor of $S_{i3}$. The source of the N-MOSFET transistor of $S_{i2}$ is connected to the negative terminal of the capacitor $C_i$ and to the source of the N-MOSFET transistor of $S_{i4}$.

Electric DC providing means are for example photovoltaic elements (PV module(s)) providing an input voltage Vin. The positive terminal of electric DC providing means is connected to a first terminal of a switch $S_{wb}$. The switch $S_{wb}$ may be a switch controlled by a service man or a processor. The switch $S_{wb}$ may be a circuit breaker or an interrupter or a relay or a N-MOSFET transistor.

The second terminal of the switch $S_{wb}$ is connected to an input circuit named snubber circuit which is composed of a resistor $R_S$, a capacitor $C_S$ and a diode $D_S$.

The second terminal of the switch $S_{wb}$ is connected to the anode of the diode $D_S$, to a first terminal of the resistor $R_S$ and to the drain of the N-MOSFET transistor of the switch $S_{12}$. The cathode of the diode $D_S$ is connected to a second terminal of the resistor $R_S$ and to a first terminal of the capacitor $C_S$.

The second terminal of the capacitor $C_S$ is connected to the negative terminal of electric DC providing means.

The source of the N-MOSFET transistor of $S_{14}$ is connected to the drain of the N-MOSFET transistor of $S_{22}$.

The source of the N-MOSFET transistor of $S_{24}$ is connected to the drain of the N-MOSFET transistor of $S_{32}$.

The source of the N-MOSFET transistor of $S_{31}$ is connected to the drain of the N-MOSFET transistor of $S_{32}$. The source of the N-MOSFET transistor of $S_{32}$ is connected to the negative terminal of the capacitor $C_3$ and to the drain of the N-MOSFET transistor of $S_{33}$.

The drain of the N-MOSFET transistor of $S_{31}$ is connected to the positive terminal of the capacitor $C_3$ and to the anode of a diode Do of an output circuit.

The output circuit is composed of the switch $S_{DIS}$, the resistor $R_{DIS}$, the diode Do and a capacitor $C_O$.

The source of the N-MOSFET transistor of $S_{33}$ is connected to the negative terminal of electric DC providing means.

The cathode of the diode Do is connected to the positive terminal of the capacitor $C_O$ and to a first terminal of the resistor $R_{DIS}$.

The second terminal of a discharge resistor $R_{DIS}$ is connected to a first terminal of a switch $S_{DIS}$. The switch $S_{DIS}$ may be a relay or a N-MOSFET transistor or any controllable switch.

The second terminal of a switch $S_{DIS}$ is connected to the negative terminal of the capacitor $C_O$ and to the negative terminal of electric DC providing means.

The load of the boost converter is connected between the cathode of the diode Do and the negative terminal of electric DC providing means.

The voltage on the capacitor $C_O$ is equal to $V_{CO}$, the voltage on the capacitor $C_S$ is equal to $V_{CS}$, the voltage on the capacitor $C_1$ is equal to $V_{C1}$, the voltage on the capacitor $C_2$ is equal to $V_{C2}$ and the voltage on the capacitor $C_3$ is equal to $V_{C3}$.

The voltage difference between the input and the output of B1 is named Vb1, the voltage difference between the input and the output of B2 is named Vb2 and the voltage difference between the input and the output of B3 is named Vb3. Vb3 equals Vb3* when switch $S_{33}$ is on, and equals Vb3** when switch $S_{33}$ is off.

In operation, RLBC provides discrete values of voltage step-up ratio which are dependent on the number of available "bits". This number of discrete values of step-up ratio may respect the law:

$$n_{ratios} = 2^n$$

where "$n_{ratios}$" is the total number of possible step-up ratios (or duty-cycles) and "n" is the number of bits connected in series.

The voltage values imposed in each bit may respect the following law:

$$[Vc1 : Vc2 : \ldots : Vcn] = [1 : 2 : \ldots 2^{(n-1)}] \, V_{CO} / 2^n$$

where $V_{CO}$ is the stepped-up output voltage.

For obtaining a constant output voltage, it is possible to have "$n_{ratios}$" different input voltages, which will respect the following law:

$$Vin = V_{CO} / ratio_i \, , \, i=1,2,\ldots n_{ratios}$$

For the case n=3 bits of Fig. 1, [Vc1:Vc2:Vc3] = [1:2:4]Vref.

The switching pattern of the switches of each bridge Bi is defined so as to offer a voltage Vbi at the connectors of the bridge that equals + Vci, -Vci, or 0, where Vci is the voltage of the capacitor $C_i$. Moreover, the switching pattern of each bit Bi is timely defined as a succession of $2^n$ equal sub periods $\Delta T$ of the main switching period T = 1/f.

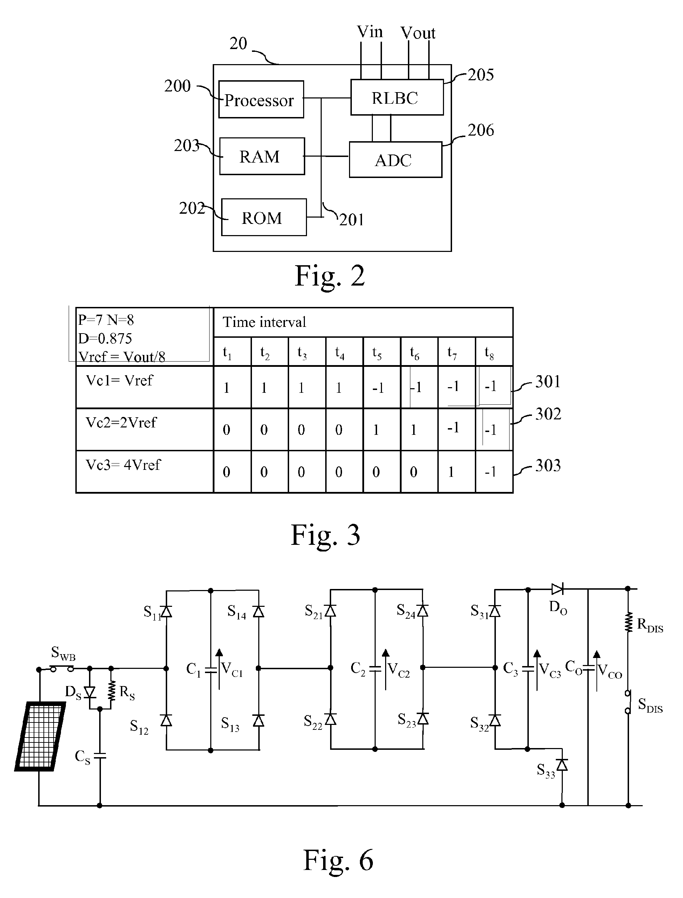

An example of the voltage values on the bridges of the boost converter composed of three bridge devices will be described in reference to the Fig. 3.

It has to be noted here that other configurations like [Vc1:Vc2:Vc3] = [2:3:4] or [Vc1:Vc2:Vc3:Vc3] = [1:1:1:4] may be used. Furthermore, $n_{ratios}$ can finally be higher than $2^n$.

The switching patterns are applied on the gates of the N-MOSFET transistors of the switches $S_{11}$, $S_{12}$, $S_{13}$, $S_{14}$, $S_{21}$, $S_{22}$, $S_{23}$, $S_{24}$, $S_{31}$, $S_{32}$ and $S_{33}$.

According to the invention, the capacitors $C_1$ to $C_n$, $C_S$ and $C_O$ are discharged in at least n+1 periods of time.

According to the invention, the switches of the bridge devices are set in n-1 different configurations in order to discharge the capacitors of n-1 different bridge devices within n-1 consecutive periods of time.

According to the invention, the boost converter composed of three bridge devices comprises an output stage composed of at least a diode, an output capacitor, a discharge resistor and a discharge switch and the switches of the bridge devices and the discharge switch are set in a $n^{th}$ configuration in order to discharge the output capacitor within a $n^{th}$ time period.

According to the invention, the $n^{th}$ configuration further enables the discharge within the $n^{th}$ time period of the capacitor of the $n^{th}$ bridge device.

According to the invention, the boost converter composed of three bridge devices further comprises an input stage composed of at least an input diode, an input capacitor and an input resistor and the switches of the bridge devices and the discharge switch are set in a (n+1)th configuration in order to discharge the input capacitor within a (n+1)th time period.

According to the invention, the nth configuration is set as first, followed by the (n+1)th configuration and followed by the n-1 different configurations.

**Fig. 1b** represents a second example of a boost converter composed of three bridge devices and wherein the electric direct current providing means are any kind of electric DC power sources.

The second example of the boost converter composed of three bridge devices is almost identical to the first example of the converters.

The second example of the converter is composed of the same electric diagram and the same components $S_{11}$, $S_{12}$, $S_{13}$, $S_{14}$, $S_{21}$, $S_{22}$, $S_{23}$, $S_{24}$, $S_{31}$, $S_{32}$, $S_{33}$, $S_{DIS}$, $S_{WB}$, $C_1$, $C_2$, $C_3$, $C_O$, $C_S$, $R_{DIS}$, Rs, Ds, Do and further comprises a discharging circuit.

The additional discharging circuit is composed of a discharge diode $D_{DIS}$ and a second discharge resistor $R_{DIS'}$.

The cathode of the discharge diode $D_{DIS}$ is connected to the input, composed of the source of the N-MOSFET transistor of $S_{11}$ connected to the drain of the N-MOSFET transistor of $S_{12}$, of first bridge device B1. The anode of the discharge diode $D_{DIS}$ is connected to a first terminal of the second discharge resistor $R_{DIS'}$ and the second terminal of the second discharge resistor $R_{DIS'}$ is connected to the negative terminal of the electric direct current providing means.

If the electric direct current providing means have a protection diode in which the cathode is connected to the positive terminal of the electric direct current providing means and the anode is connected to the negative terminal of the electric direct current providing means, a huge current flows through the protection diode during the discharge of $C_2$ or $C_1$ if the switch $S_{WB}$ is in conduction mode. This current may destroy the protection diode or the capacitors or the other switches of the boost converter composed of three bridge devices.

The discharging circuit enables the discharge of the capacitors $C_1$ and $C_2$ when the switch $S_{WB}$ is not conducting and limits the discharge currents thanks to the selection of a proper value of the second resistor $R_{DIS'}$.

**Fig. 2** represents an example of a device comprising a boost converter composed of three bridge devices.

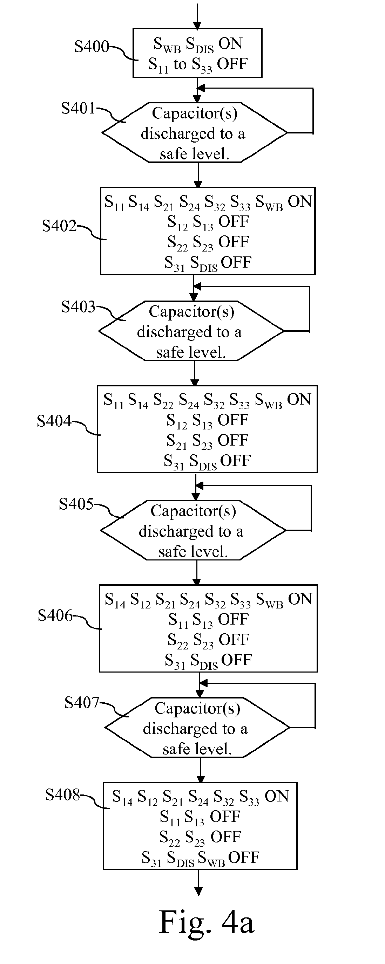

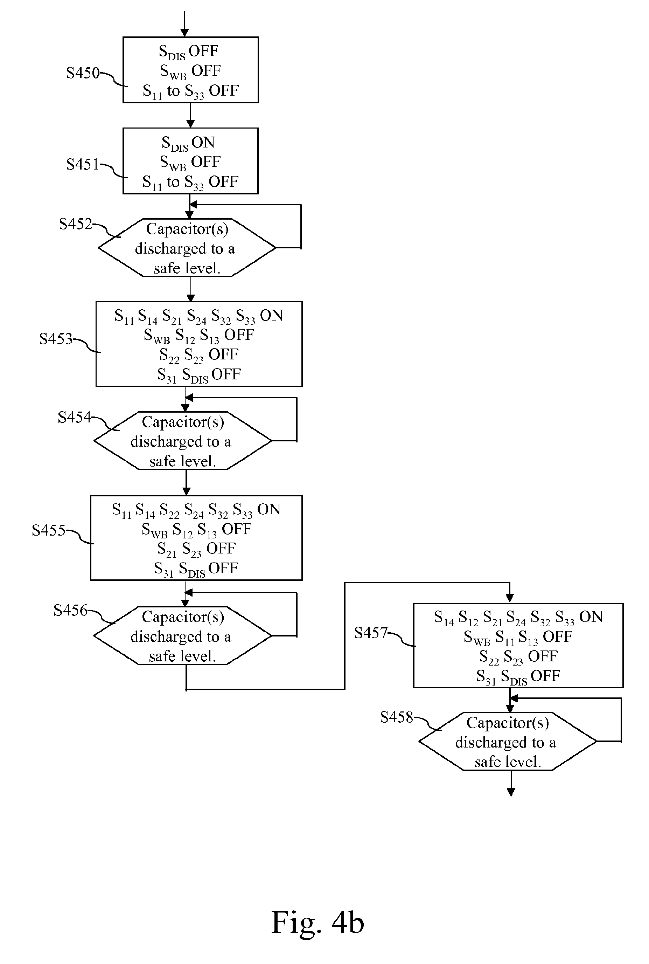

The device 20 has, for example, an architecture based on components connected together by a bus 201 and a processor 200 controlled by the program related to the algorithm as disclosed in the Fig. 4a or 4b.

It has to be noted here that the device 20 is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203, an analogue to digital converter ADC 206 and the RLBC module as the one disclosed in Fig. 1a or 1b.

The read only memory ROM 202 contains instructions of the program related to the algorithm as disclosed in the Fig. 4a or 4b which are transferred, when the device 20 is powered on to the random access memory RAM 203.

The read only memory ROM 202 memorizes tables as the one shown in Fig. 3 during the normal operation of the boost converter composed of three bridge devices and also the switching patterns corresponding to the first, second, third and fourth configuration of the switches of the RLBC during the discharge process.

The RAM memory 203 contains registers intended to receive variables, and the instructions of the program related to the algorithm as disclosed in the Fig. 4a or 4b.

The analogue to digital converter 206 is connected to the RLBC and converts voltages representative of the input voltage Vin and/or the output voltage Vout $=V_{CO}$ into binary information.

**Fig. 3** is an example of voltage values on the bridges of the boost converter composed of three bridges in order to have a ratio $V_{CO}$/Vin=N/(N-P)= 8 (D=0.875).

The periodical pattern used when the RLCB boosts the electric DC providing means is decomposed into eight time intervals. The reference voltage Vref equals Vout divided by eight.

In the line 301, a value which is equal to 1 means that Vb1=Vref, a value which is equal to -1 means Vb1=-Vref and a value which is equal to 0 means Vb1=0.

In the line 302, a value which is equal to 1 means that Vb2=2Vref, a value which is equal to -1 means Vb2=-2Vref and a value which is equal to 0 means Vb2=0.

In the line 303, a value which is equal to 1 means that Vb3=4Vref, a value which is equal to -1 means Vb3=-4Vref and a value which is equal to 0 means Vb3=0.

The duration of each time interval $t_1$ to $t_8$ is $\Delta T=T/N$ (N=8), where T is the duration of the cycle operated by switch $S_{33}$ of Fig. 1.

Eight time intervals are needed in order to get a ratio Vout/Vin= 8.

At time intervals $t_1$, $t_2$, $t_3$ and $t_4$, Vb1=Vref, Vb2=Vb3=0. At time intervals $t_5$ and $t_6$, Vb1=-Vref, Vb2=2Vref and Vb3=0. At time interval $t_7$, Vb1=-Vref, Vb2=-2Vref and Vb3=4Vref. At time interval $t_8$, Vb1=-Vref, Vb2=-2Vref and Vb3=-4Vref.

**Fig. 4a** is an example of an algorithm for discharging the capacitors of the first example of the boost converter composed of n, for example equal to three, bridge devices.

More precisely, the present algorithm is executed by the processor 200 of the device 20 comprising a boost converter composed of n bridge devices.

The present algorithm is executed each time the RLBC needs to be powered off for example for maintenance purpose or when the RLBC needs to be set in known initial conditions.

At step S400, the processor 200 sets the switches of the RLBC in the first configuration. In the first configuration, the processor 200 commands the switches of the RLBC in order to set the switches $S_{11}$ to $S_{33}$ to OFF state, i.e. to put the N-MOSFET transistors of the switches $S_{11}$, $S_{12}$, $S_{13}$, $S_{14}$, $S_{21}$, $S_{22}$, $S_{23}$, $S_{24}$, $S_{31}$, $S_{32}$ and $S_{33}$ in a non conductive mode. In the first configuration, the processor 200 commands the switches of the RLBC in order to set the switch $S_{DIS}$ to ON state, i.e. to conduction state and the switch $S_{WB}$ is kept to ON state.

The first configuration of the RLBC corresponds to the electric circuit shown in Fig. 6.

**Fig. 6** represents the states of the switches of the boost converter composed of three bridge devices when at least one capacitor is discharged in the first configuration during the first period of time and for the first example of boost converter.

As the N-MOSFET transistors of the switches $S_{11}$ to $S_{33}$ are in a non conductive mode, currents may flow or not in the body diodes of the switches $S_{11}$ to $S_{33}$ according to their polarities.

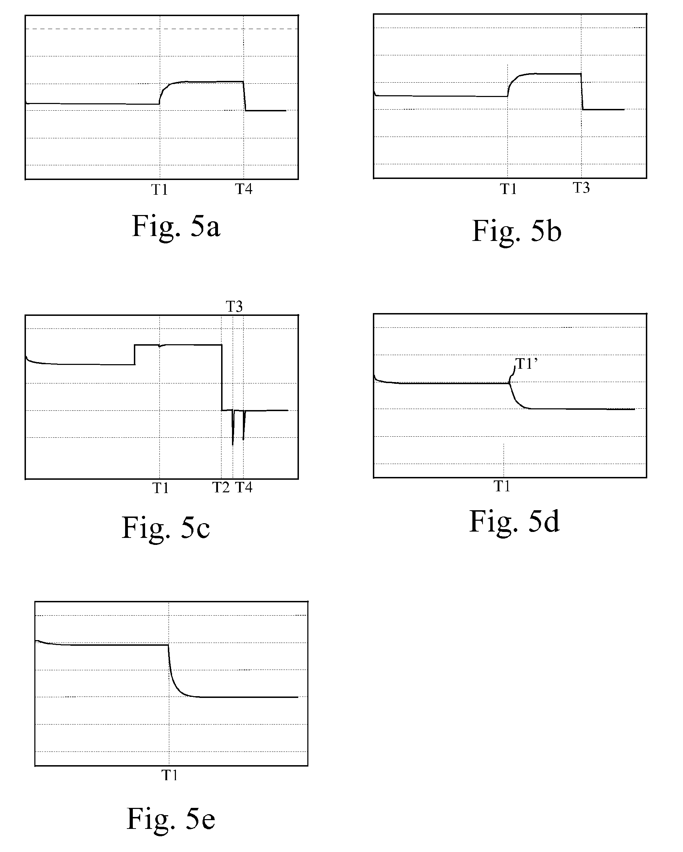

In the first period of time, which starts at T1, the capacitors $C_3$ and $C_O$ are discharged as shown in Figs 5d and 5e and the capacitors $C_1$, $C_2$ and $C_S$ are not discharged as shown in Figs 5a, 5b and 5c.

**Fig. 5a** represents the voltage variations $V_{C1}$ for the capacitor $C_1$ of the boost converter composed of three bridge devices during the different periods of time and for the first example of boost converter.

**Fig. 5b** represents the voltage variations $V_{C2}$ for the capacitor $C_2$ of the boost converter composed of three bridge devices during the different periods of time and for the first example of boost converter.

**Fig. 5c** represents the voltage variations $V_{CS}$ for the capacitor $C_S$ of the boost converter composed of three bridge devices during the different periods of time and for the first example of boost converter.

**Fig. 5d** represents the voltage variations $V_{C3}$ for the capacitor $C_3$ of the boost converter composed of three bridge devices during the different periods of time and for the first example of boost converter.

**Fig. 5e** represents the voltage variations $V_{CO}$ for the capacitor $C_O$ of the boost converter composed of three bridge devices during the different periods of time and for the first example of boost converter.

Time T1 corresponds to the instant of the command of the switches in the first configuration executed at step S400.

As shown in Fig. 5e, after T1, capacitor $C_O$ is discharged through resistor $R_{DIS}$. The other voltages in Figs. 5a to 5d $V_{C1}$, $V_{C2}$, $V_{C3}$ and Vcs don't change until the value of $V_{CO}+V_{C1}+V_{C2}$ becomes equal to Vin=$V_{CS}$.

From this time instant $V_{C1}$ and $V_{C2}$ will start being charged through the body diodes of $S_{11}$, $S_{13}$, $S_{21}$ and $S_{23}$. This charging process will last until $V_{CO}$ is completely discharged and Vin=$V_{C1}+V_{C2}=V_{OC}$ where $V_{OC}$ is the voltage Vin when no current is supplied by the power source, meaning the open-circuit voltage of a photovoltaic module. During the first period of time, in a certain moment in Fig. 5d, $V_{CO}=V_{C3}$ and from T1' both capacitors $C_O$ and $C_3$ are discharged together, since the body diode of $S_{33}$ also becomes conductive. Since both voltages $V_{CO}$ and $V_{C3}$ are monitored, when $V_{CO}=V_{C3}$, the N-MOSFET $S_{33}$ can be set in the ON state in order to avoid to stress its body diode. At the end of the first period of time $V_{CO}=V_{C3}=0$ and Vin=Vcs=Voc =$V_{C1}+V_{C2}$.

At next step S401, the processor 200 checks if it is time to change the capacitor to be discharged, i.e. if the first period of time elapsed.

If it is time to change the capacitor to be discharged, the processor 200 moves to step S402. Otherwise, the processor 200 returns to step S401.

The processor 200 may check if it is time to change the capacitor to be discharged by checking if the voltages $V_{CO}$ and $V_{C3}$ are equal or lower than 2 volts or by checking if a timer activated at step S400 which is representative of the first period of time is at least upper than a predetermined value determined according to the values of capacitors $C_O$, $C_3$ and resistor $R_{DIS}$.

At step S402, the processor 200 sets the switches of the RLBC in the second configuration. In the second configuration, the processor 200 commands the switches of the RLBC in order to set the switches $S_{WB}$, $S_{11}$, $S_{14}$, $S_{21}$, $S_{24}$, $S_{32}$ and $S_{33}$ to ON state, i.e. to put the N-MOSFET transistors of the switches $S_{11}$, $S_{14}$, $S_{21}$, $S_{24}$, $S_{32}$ and $S_{33}$ in the conductive mode. The processor 200 commands the switches of the RLBC in order to set the switches $S_{12}$, $S_{13}$, $S_{22}$, $S_{23}$, $S_{31}$ and $S_{DIS}$ to OFF state, i.e. to put the N-MOSFET transistors of the switches $S_{12}$, $S_{13}$, $S_{22}$, $S_{24}$, $S_{23}$, $S_{31}$ in the non conductive mode.

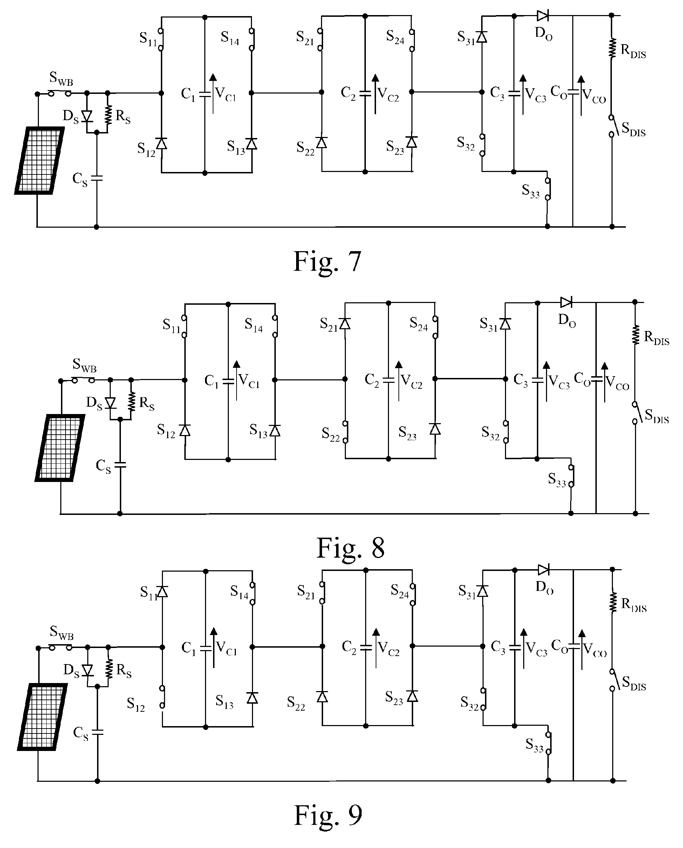

The second configuration of the RLBC corresponds to the electric circuit shown in Fig. 7.

**Fig. 7** represents the states of the switches of the boost converter composed of three bridge devices when at least one capacitor is discharged in the second configuration during the second period of time and for the first example of boost converter.

As the N-MOSFET transistors of the switches $S_{11}$, $S_{14}$, $S_{21}$, $S_{24}$, $S_{32}$ and $S_{33}$ are in the conductive mode, the

switches $S_{11}$, $S_{14}$, $S_{21}$, $S_{24}$, $S_{32}$ and $S_{33}$ are represented by shunts.

Within the second period of time, capacitor $C_S$ is discharged through resistor $R_S$, since the snubber circuit is short-circuited to the ground through the conducting N-MOSFETs $S_{11}$, $S_{14}$, $S_{21}$, $S_{24}$, $S_{32}$ and $S_{33}$.

When the electric DC providing means are photovoltaic modules, Vin will change instantly to zero and the photovoltaic module is forced to the short-circuit current $I_{SC}$ condition. Capacitor $C_S$ will discharge according to the snubber circuit time-constant and the current peak will be limited to $V_{CS}/R_S$. At the end of this second time interval, capacitor $C_S$ is completely discharged.

**Fig. 5c** represents the voltage variations $V_{CS}$ for the capacitor $C_S$ of the boost converter composed of three bridge devices during the different periods of time and for the first example of boost converter.

Time T1 corresponds to the instant of the command of the switches in the first configuration executed at step S400.

Time T2 corresponds to the instant of the command of the switches in the second configuration executed at step S402.

Times T3 and T4 correspond to the instant of the command of the switches in the third and fourth configurations which will be disclosed at steps S404 and S406 of the present algorithm.

At next step S403, the processor 200 checks if it is time to change the capacitor to be discharged, i.e. if the second period of time is elapsed.

If it is time to change the capacitor to be discharged, the processor 200 moves to step S404. Otherwise, the processor 200 returns to step S403.

The processor 200 may check if it is time to change the capacitor to be discharged by checking if the voltage $V_{CS} \leq 2$ volts or by checking if a timer activated at step S402 is at least upper than a predetermined value determined according to the values of capacitor $C_S$ and resistor $R_S$.

At step S404, the processor 200 sets the switches of the RLBC in the third configuration. In the third configuration, the processor 200 commands the switches of the RLBC in order to set the switches $S_{WB}$, $S_{11}$, $S_{14}$, $S_{22}$, $S_{24}$, $S_{32}$ and $S_{33}$ to ON state, i.e. to put the N-MOSFET transistors of the switches $S_{11}$, $S_{14}$, $S_{22}$, $S_{24}$, $S_{32}$ and $S_{33}$ in the conductive mode. The processor 200 commands the switches of the RLBC in order to set the switches $S_{12}$, $S_{13}$, $S_{21}$, $S_{23}$, $S_{31}$ and $S_{DIS}$ to OFF state, i.e. to put the N-MOSFET transistors of the switches $S_{12}$, $S_{13}$, $S_{21}$ and $S_{23}$, $S_{31}$ in the non conductive mode.

The third configuration of the RLBC corresponds to the electric circuit shown in Fig. 8.

**Fig. 8** represents the states of the switches of the boost converter composed of three bridge devices when at least one capacitor is discharged in the third configuration during the third period of time and for the first example of boost converter.

As the N-MOSFET transistors of the switches $S_{11}$, $S_{14}$, $S_{22}$, $S_{24}$, $S_{32}$ and $S_{33}$ are in the conductive mode, the switches $S_{11}$, $S_{14}$, $S_{22}$, $S_{24}$, $S_{32}$ and $S_{33}$ are represented by shunts.

In the third period of time, $V_{C2}$ is discharged almost in the same manner as $V_{CS}$.

**Fig. 5b** represents the voltage variations $V_{C2}$ for the capacitor $C_2$ of the boost converter composed of three bridge devices during the different periods of time for the first example of boost converter.

Time T1 corresponds to the instant of the command of the switches in the first configuration executed at step S400.

Time T3 corresponds to the instant of the command of the switches in the third configuration executed at step S404.

When the electric DC providing means are photovoltaic modules without protection diodes, $V_{C2}$ is applied to the photovoltaic module, meaning that there will be a negative voltage on the photovoltaic module that will last until the moment in which the capacitor $C_2$ is completely discharged. The current through the capacitor $C_2$ will be $I_{SC}$ (photovoltaic module short-circuit current) plus the component through the resistor $R_S$ and with a current peak limited to $I_{SC} + V_{C2}/R_S$.

That negative voltage appears also on capacitor $C_S$ as it is shown at T3 in the Fig. 5c.

At next step S405, the processor 200 checks if it is time to change the capacitor to be discharged, i.e. if the third period of time is elapsed.

If it is time to change the capacitor to be discharged, the processor 200 moves to step S406. Otherwise, the processor 200 returns to step S405.

The processor 200 may check if it is time to change the capacitor to be discharged by checking if the voltage $V_{C2} \leq 2$ volts or by checking if a timer activated at step S404 is at least upper than a predetermined value determined according to the values of capacitor $C_2$ and resistor $R_S$.

At step S406, the processor 200 sets the switches of the RLBC in the fourth configuration. In the fourth configuration, the processor 200 commands the switches of the RLBC in order to set the switches $S_{WB}$, $S_{14}$, $S_{12}$, $S_{21}$, $S_{24}$, $S_{32}$ and $S_{33}$ to ON state, i.e. to put the N-MOSFET transistors of the switches $S_{14}$, $S_{12}$, $S_{21}$, $S_{24}$, $S_{32}$ and $S_{33}$ in the conductive mode. In the fourth configuration, the processor 200 commands the switches of the RLBC in order to set the switches $S_{11}$, $S_{13}$, $S_{22}$, $S_{23}$, $S_{31}$ and $S_{DIS}$ to OFF state, i.e. to put the N-MOSFET transistors of the switches $S_{11}$, $S_{13}$,

$S_{22}$, $S_{23}$, $S_{31}$ in the non conductive mode.

The fourth configuration of the RLBC corresponds to the electric circuit shown in Fig. 9.

**Fig. 9** represents the states of the switches of the boost converter composed of three bridge devices when at least one capacitor is discharged in the fourth configuration during the fourth period of time and for the first example of boost converter.

As the N-MOSFET transistors of the switches $S_{14}$, $S_{12}$, $S_{21}$, $S_{24}$, $S_{32}$ and $S_{33}$ are in the conductive mode, the switches $S_{14}$, $S_{12}$, $S_{21}$, $S_{24}$, $S_{32}$ and $S_{33}$ are represented by shunts.

In the fourth period of time, $C_1$ is discharged in the same manner as $C_2$.

**Fig. 5a** represents the voltage variations $V_{C1}$ for the capacitor $C_1$ of the boost converter composed of three bridge devices during the different periods of time for the first example of boost converter.

Time T1 corresponds to the instant of the command of the switches in the first configuration executed at step S400.

Time T4 corresponds to the instant of the command of the switches in the fourth configuration executed at step S406.

When the electric DC providing means are photovoltaic modules, $V_{C1}$ is applied to the photovoltaic module, meaning that there will be a negative voltage on the photovoltaic module that will last until the moment in which the capacitor $C_1$ is completely discharged. The current through the capacitor will be $I_{SC}$ plus the component through resistor $R_S$ and with a current peak limited to $I_{SC} + V_{C1}/R_S$.

That negative voltage appears also on capacitor $C_S$ as it is shown at T3 in the Fig. 5c.

At next step S407, the processor 200 checks if it is time to change the capacitor to be discharged.

If it is time to change the capacitor to be discharged, the processor 200 moves to step S408. Otherwise, the processor 200 returns to step S407.

The processor 200 may check if it is time to change the capacitor to be discharged by checking if the voltage $V_{C1} \leq 2$ volts or by checking if a timer activated at step S406 is at least upper than a predetermined value determined according to the values of $C_1$ and $R_S$.

At next step S408, the switch $S_{WB}$ is put in OFF state.

It has to be noted here that, in a variant, the steps S406 and S407 can be executed prior to the step S404.

Furthermore, when the RLBC is composed of a more important number of bits, for example one more bit, the present algorithm comprises two more steps for each supplementary bit, which enable the discharge of the capacitor of each supplementary bit.

**Fig. 4b** is an example of an algorithm for discharging the capacitors of the second example of the boost converter composed of three bridge devices.

More precisely, the present algorithm is executed by the processor 200 of the device 20 comprising a boost converter composed of n, for example equal to three, bridge devices.

The present algorithm is executed each time the RLBC needs to be powered off for example for maintenance purpose or when the RLBC needs to be set in known initial conditions.

At step S450, the processor 200 commands the switches of the RLBC in order to set the switches $S_{11}$ to $S_{33}$ to OFF state, i.e. to put the N-MOSFET transistors of the switches $S_{11}$, $S_{12}$, $S_{13}$, $S_{14}$, $S_{21}$, $S_{22}$, $S_{23}$, $S_{24}$, $S_{31}$, $S_{32}$ and $S_{33}$ in a non conductive mode. The processor 200 commands the switches of the RLBC in order to set the switches $S_{WB}$ and $S_{DIS}$ to OFF state, i.e. to non conduction state.

Thus, the RLBC is disconnected from the load and from the electric direct current providing means which can be a voltage source, a current source or a photovoltaic module using or not the anti-parallel protection diode. All capacitors $C_S$, $C_1$, $C_2$, $C_3$ and Co of the RLBC are kept charged since there is no current path for their discharge.

At step S451, the processor 200 sets the switches of the RLBC in the first configuration. In the first configuration, the processor 200 commands the switches of the RLBC in order to set the switches $S_{11}$ to $S_{33}$ to OFF state, i.e. to put the N-MOSFET transistors of the switches $S_{11}$, $S_{12}$, $S_{13}$, $S_{14}$, $S_{21}$, $S_{22}$, $S_{23}$, $S_{24}$, $S_{31}$, $S_{32}$ and $S_{33}$ in a non conductive mode. In the first configuration, the processor 200 commands the switches of the RLBC in order to set the switch $S_{WB}$ to OFF state and the switch $S_{DIS}$ to ON state, i.e. to conduction state.

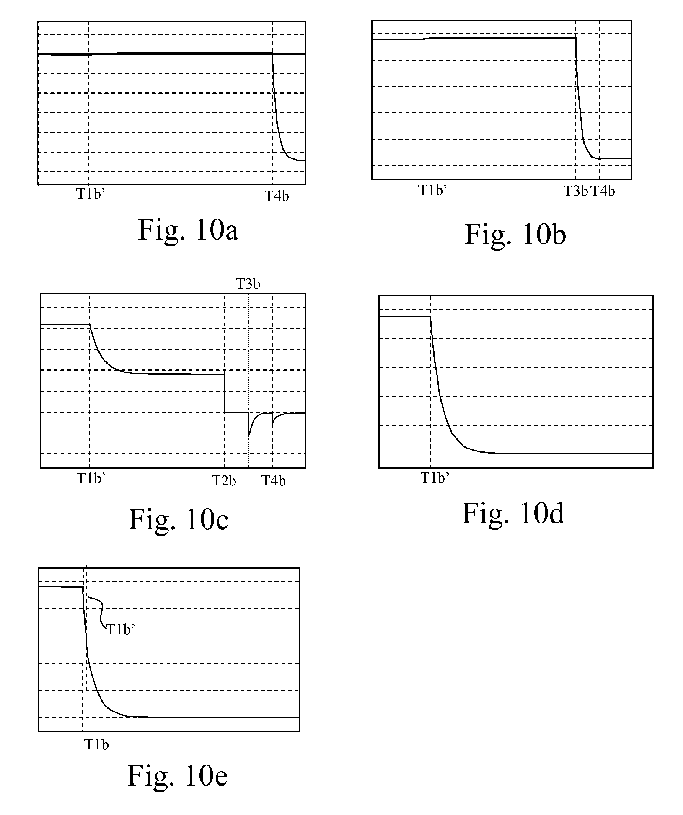

During the first period of time, the capacitor $C_O$ starts to be discharged through $R_{DIS}$. The first configuration of the RLBC is set for a first period of time, which starts at T1b as shown in Fig. 10e.

Fig. 10e represents the voltage variations $V_{CO}$ for the capacitor $C_O$ of the boost converter composed of three bridge devices during the different periods of time and for the second example of boost converter.

At time T1b' the voltage level of capacitor $C_3$ becomes equal to the voltage level of capacitor $C_O$. In this way, the body diode of $S_{33}$ and also the diode Do become conductive, and from this time instant both capacitors are discharged through resistor $R_{DIS}$. The capacitor Cs starts also to be discharged through the body diodes of the switches $S_{11}$, $S_{13}$, $S_{21}$, $S_{23}$, $S_{31}$ and Do, and consequently also through capacitors $C_1$, $C_2$ and resistor $R_S$. This phase lasts until capacitors $C_O$ and $C_3$ are completely discharged, and so, Vcs, $V_{C1}$ and $V_{C2}$ will be under equilibrium and there will be no current through them anymore.

These behaviors are disclosed in Figs. 10a to 10e.

**Fig. 10a** represents the voltage variations $V_{C1}$ for the capacitor $C_1$ of the boost converter composed of three bridge devices during the different periods of time and for the second example of boost converter.

**Fig. 10b** represents the voltage variations $V_{C2}$ for the capacitor $C_2$ of the boost converter composed of three bridge devices during the different periods of time and for the second example of boost converter.

**Fig. 10c** represents the voltage variations $V_{CS}$ for the capacitor $C_S$ of the boost converter composed of three bridge devices during the different periods of time and for the second example of boost converter.

**Fig. 10d** represents the voltage variations $V_{C3}$ for the capacitor $C_3$ of the boost converter composed of three bridge devices during the different periods of time and for the second example of boost converter.

At next step S452, the processor 200 checks if it is time to change the capacitor to be discharged, i.e. if the first period of time elapsed.

If it is time to change the capacitor to be discharged, the processor 200 moves to step S453. Otherwise, the processor 200 returns to step S452.

The processor 200 may check if it is time to change the capacitor to be discharged by checking if the voltages $V_{CO}$ and $V_{C3}$ are equal or lower than 2 volts or by checking if a timer activated at step S451 which is representative of the first period of time is at least upper than a predetermined value determined according to the values of capacitors $C_O$, $C_3$ and resistor $R_{DIS}$.

At step S453, the processor 200 sets the switches of the RLBC in the second configuration. In the second configuration, the processor 200 commands the switches of the RLBC in order to set the switches $S_{11}$, $S_{14}$, $S_{21}$, $S_{24}$, $S_{32}$ and $S_{33}$ to ON state, i.e. to put the N-MOSFET transistors of the switches $S_{11}$, $S_{14}$, $S_{21}$, $S_{24}$, $S_{32}$ and $S_{33}$ in the conductive mode. The processor 200 commands the switches of the RLBC in order to set the switches $S_{WB}$, $S_{12}$, $S_{13}$, $S_{22}$, $S_{23}$, $S_{31}$ and $S_{DIS}$ to OFF state, i.e. to put the N-MOSFET transistors of the switches $S_{12}$, $S_{13}$, $S_{22}$, $S_{24}$, $S_{23}$, $S_{31}$ in the non conductive mode.

Within the second period of time, capacitor $C_S$ is discharged through resistor $R_S$, since the snubber circuit is short-circuited to the ground through the conducting N-MOSFET of $S_{11}$, $S_{14}$, $S_{21}$, $S_{24}$, $S_{32}$ and $S_{33}$.

**Fig. 10c** represents the voltage variations $V_{CS}$ for the capacitor $C_S$ of the boost converter composed of three bridge devices during the different periods of time and for the second example of boost converter.

Time T1b' corresponds to the instant in which $C_S$ starts to be discharged after the command of the switches in the first configuration executed at step S451.

Time T2b corresponds to the instant of the command of the switches in the second configuration executed at step S453.

Times T3b and T4b correspond to the instant of the command of the switches in the third and fourth configurations which will be disclosed at steps S455 and S457 of the present algorithm.

At next step S454, the processor 200 checks if it is time to change the capacitor to be discharged, i.e. if the second period of time is elapsed.

If it is time to change the capacitor to be discharged, the processor 200 moves to step S455. Otherwise, the processor 200 returns to step S454.

The processor 200 may check if it is time to change the capacitor to be discharged by checking if the voltage $V_{CS} \le 2$ volts or by checking if a timer activated at step S453 is at least upper than a predetermined value determined according to the values of capacitor $C_S$ and resistor $R_S$.

At step S455, the processor 200 sets the switches of the RLBC in the third configuration. In the third configuration, the processor 200 commands the switches of the RLBC in order to set the switches $S_{11}$, $S_{14}$, $S_{22}$, $S_{24}$, $S_{32}$ and $S_{33}$ to ON state, i.e. to put the N-MOSFET transistors of the switches $S_{11}$, $S_{14}$, $S_{22}$, $S_{24}$, $S_{32}$ and $S_{33}$ in the conductive mode. The processor 200 commands the switches of the RLBC in order to set the switches $S_{WB}$, $S_{12}$, $S_{13}$, $S_{21}$, $S_{23}$, $S_{31}$ and $S_{DIS}$ to OFF state, i.e. to put the N-MOSFET transistors of the switches $S_{12}$, $S_{13}$, $S_{21}$ and $S_{23}$, $S_{31}$ in the non conductive mode.

In the third period of time, $V_{C2}$ is discharged almost in the same manner as $V_{CS}$.

**Fig. 10b** represents the voltage variations $V_{C2}$ for the capacitor $C_2$ of the boost converter composed of three bridge devices during the different periods of time for the second example of boost converter.

Time T3b corresponds to the instant of the command of the switches in the third configuration executed at step S455.

Time T4b corresponds to the instant of the command of the switches in the fourth configuration executed at step S457.

The capacitor $C_2$ is discharged through $D_{DIS}$ and $R_{DIS}$, and also through resistor $R_S$ and capacitor $C_S$. Capacitor $C_S$ experiments an initial negative voltage imposed by capacitor $C_2$, being then discharged simultaneously to it, up to the complete discharge of both capacitors $C_2$ and $C_S$. That negative voltage appears also on capacitor $C_S$ as it is shown at T3b in the Fig. 10c.

At next step S456, the processor 200 checks if it is time to change the capacitor to be discharged, i.e. if the third period of time is elapsed.

If it is time to change the capacitor to be discharged, the processor 200 moves to step S457. Otherwise, the processor 200 returns to step S456.

The processor 200 may check if it is time to change the capacitor to be discharged by checking if the voltage $V_{C2} \leq 2$ volts or by checking if a timer activated at step S455 is at least upper than a predetermined value determined according to the values of capacitors $C_2$ and $C_S$ and resistors Rs and $R_{DIS}'$.

At step S457, the processor 200 sets the switches of the RLBC in the fourth configuration. In the fourth configuration, the processor 200 commands the switches of the RLBC in order to set the switches $S_{14}$, $S_{12}$, $S_{21}$, $S_{24}$, $S_{32}$ and $S_{33}$ to ON state, i.e. to put the N-MOSFET transistors of the switches $S_{14}$, $S_{12}$, $S_{21}$, $S_{24}$, $S_{32}$ and $S_{33}$ in the conductive mode. In the fourth configuration, the processor 200 commands the switches of the RLBC in order to set the switches $S_{WB}$, $S_{11}$, $S_{13}$, $S_{22}$, $S_{23}$, $S_{31}$ and $S_{DIS}$ to OFF state, i.e. to put the N-MOSFET transistors of the switches $S_{11}$, $S_{13}$, $S_{22}$, $S_{23}$, $S_{31}$ in the non conductive mode.

In the fourth period of time, $V_{C1}$ is discharged in the same manner as $V_{C2}$.

**Fig. 10a** represents the voltage variations $V_{C1}$ for the capacitor $C_1$ of the boost converter composed of three bridge devices during the different periods of time for the second example of boost converter.

Time T4b corresponds to the instant of the command of the switches in the fourth configuration executed at step S457.

The capacitor $C_1$ is discharged through $D_{DIS}$ and $R_{DIS}'$ and also through resistor $R_S$ and capacitor $C_S$. Capacitor $C_S$ experiments an initial negative voltage imposed by capacitor $C_2$, being then discharged simultaneously to it, up to the complete discharge of both capacitors $C_2$ and $C_S$. That negative voltage appears also on capacitor $C_S$ as it is shown at T4b in the Fig. 10c.

At next step S458, the processor 200 checks if it is time to change the capacitor to be discharged.

If it is time to change the capacitor to be discharged, the processor 200 interrupts the present algorithm. Otherwise, the processor 200 returns to step S458.

The processor 200 may check if it is time to change the capacitor to be discharged by checking if the voltage $V_{C1} \leq 2$ volts or by checking if a timer activated at step S457 is at least upper than a predetermined value determined according to the values of capacitors $C_1$ and $C_S$ and resistors Rs and $R_{DIS}'$.

It has to be noted here that, when the RLBC is composed of a more important number of bits, for example one more bit, the present algorithm comprises two more steps for each supplementary bit, which enable the discharge of the capacitor of each supplementary bit.

Naturally, many modifications can be made to the embodiments of the invention described above without departing from the scope of the present invention.

**Claims**

1. Method for discharging the capacitors of a boost converter composed of a number n of bridge devices connected in series, the boost converter composed of n bridge devices being connected to electric direct current providing means, each bridge device being composed of plural switches and a capacitor, **characterised in that** the method comprises the steps of :

   - setting the switches of the bridge devices in n-1 different configurations in order to discharge the capacitors of n-1 different bridge devices within n-1 consecutive periods of time.

2. Method according to claim 1, **characterised in that** the boost converter composed of n bridge devices comprises an output stage composed of at least a diode, an output capacitor, a discharge resistor and a discharge switch, **characterised in that** the method comprises further step of :

   - setting the switches of the bridge devices and the discharge switch in a $n^{th}$ configuration in order to discharge the output capacitor within a $n^{th}$ time period.

3. Method according to claim 2, **characterised in that** the $n^{th}$ configuration further enables the discharge within the $n^{th}$ time period of the capacitor of the $n^{th}$ bridge device.

4. Method according to any of the claims 1 to 3, **characterised in that** the boost converter composed of n bridge devices further comprises an input stage composed of at least an input diode, an input capacitor and an input resistor, **characterised in that** the method comprises further step of :

- setting the switches of the bridge devices and the discharge switch in a $(n+1)^{th}$ configuration in order to discharge the input capacitor within a $(n+1)^{th}$ time period.

5. Method according to the claim 4, **characterised in that** the $n^{th}$ configuration is set as first, followed by the $(n+1)^{th}$ configuration and followed by the other n-1 different configurations.

6. Apparatus for discharging the capacitors of a boost converter composed of a number n of bridge devices connected in series, the boost converter composed of n bridge devices being connected to electric direct current providing means, each bridge device being composed of plural switches and a capacitor, **characterised in that** the apparatus comprises :

- means for setting the switches of the bridge devices in n-1 different configurations in order to discharge the capacitors of n-1 different bridge devices within n-1 consecutive periods of time.

7. Apparatus according to claim 6, **characterised in that** the boost converter composed of n bridge devices further comprises an output stage composed of at least a diode, an output capacitor, a discharge resistor and a discharge switch, **characterised in that** the apparatus further comprises :

- means for setting the switches of the bridge devices and the discharge switch in a $n^{th}$ configuration in order to discharge the output capacitor within a $n^{th}$ time period.

8. Apparatus according to claim 7, **characterised in that** the $n^{th}$ configuration further enables the discharge within the $n^{th}$ time period of the capacitor of the $n^{th}$ bridge device.

9. Apparatus according to any of the claims 6 to 8, **characterised in that** the boost converter composed of n bridge devices further comprises an input stage composed of at least an input diode, an input capacitor and an input resistor, **characterised in that** the apparatus further comprises of :

- means for setting the switches of the bridge devices and the discharge switch in a $(n+1)^{th}$ configuration in order to discharge the input capacitor within a $(n+1)^{th}$ time period.

10. Apparatus according to any of the claims 6 to 9, **characterised in that** the electric direct current providing means are photovoltaic modules.

11. Apparatus according to claim 10, **characterised in that** the boost converter composed of n bridge devices further comprises a switch connecting the photovoltaic modules and the input stage and **in that** the switch connecting the photovoltaic modules and the input stage is in conducting state during the n+1 configurations.

12. Apparatus according to any of the claims 6 to 8, **characterised in that** the boost converter composed of n bridge devices further comprises a switch connecting the electric direct current providing means and the input stage and **in that** the switch connecting the electric direct current providing means and the input stage is in a non conducting state during the n+1 configurations.

13. Apparatus according to claim 12, **characterised in that** the boost converter composed of n bridge devices further comprises a discharge circuit connected between the switch connecting the electric direct current providing means and a first bridge device, the discharge circuit being composed of a discharge diode and a second discharge resistor, the cathode of the discharge diode being connected to the input of the first bridge device, the anode of the discharge diode being connected to the first terminal of the second discharge resistor and the second terminal of the second discharge resistor being connected to the negative terminal of the electric direct current providing means.

Fig. 1a

Fig. 1b

Fig. 2

| P=7 N=8 D=0.875 Vref = Vout/8 | Time interval | | | | | | | | |
|---|---|---|---|---|---|---|---|---|---|
| | $t_1$ | $t_2$ | $t_3$ | $t_4$ | $t_5$ | $t_6$ | $t_7$ | $t_8$ | |
| Vc1= Vref | 1 | 1 | 1 | 1 | -1 | -1 | -1 | -1 | 301 |
| Vc2=2Vref | 0 | 0 | 0 | 0 | 1 | 1 | -1 | -1 | 302 |
| Vc3= 4Vref | 0 | 0 | 0 | 0 | 0 | 0 | 1 | -1 | 303 |

Fig. 3

Fig. 6

S400 — $S_{WB}$ $S_{DIS}$ ON
$S_{11}$ to $S_{33}$ OFF

S401 — Capacitor(s) discharged to a safe level.

S402 — $S_{11}$ $S_{14}$ $S_{21}$ $S_{24}$ $S_{32}$ $S_{33}$ $S_{WB}$ ON
$S_{12}$ $S_{13}$ OFF
$S_{22}$ $S_{23}$ OFF
$S_{31}$ $S_{DIS}$ OFF

S403 — Capacitor(s) discharged to a safe level.

S404 — $S_{11}$ $S_{14}$ $S_{22}$ $S_{24}$ $S_{32}$ $S_{33}$ $S_{WB}$ ON
$S_{12}$ $S_{13}$ OFF
$S_{21}$ $S_{23}$ OFF
$S_{31}$ $S_{DIS}$ OFF

S405 — Capacitor(s) discharged to a safe level.

S406 — $S_{14}$ $S_{12}$ $S_{21}$ $S_{24}$ $S_{32}$ $S_{33}$ $S_{WB}$ ON
$S_{11}$ $S_{13}$ OFF
$S_{22}$ $S_{23}$ OFF
$S_{31}$ $S_{DIS}$ OFF

S407 — Capacitor(s) discharged to a safe level.

S408 — $S_{14}$ $S_{12}$ $S_{21}$ $S_{24}$ $S_{32}$ $S_{33}$ ON
$S_{11}$ $S_{13}$ OFF
$S_{22}$ $S_{23}$ OFF
$S_{31}$ $S_{DIS}$ $S_{WB}$ OFF

Fig. 4a

S450 —

S_DIS OFF
S_WB OFF
S_11 to S_33 OFF

S451 —

S_DIS ON
S_WB OFF
S_11 to S_33 OFF

S452 —

Capacitor(s)
discharged to a
safe level.

S453 —

$S_{11} S_{14} S_{21} S_{24} S_{32} S_{33}$ ON
$S_{WB} S_{12} S_{13}$ OFF
$S_{22} S_{23}$ OFF
$S_{31} S_{DIS}$ OFF

S454 —

Capacitor(s)
discharged to a
safe level.

S455 —

$S_{11} S_{14} S_{22} S_{24} S_{32} S_{33}$ ON
$S_{WB} S_{12} S_{13}$ OFF
$S_{21} S_{23}$ OFF
$S_{31} S_{DIS}$ OFF

S456 —

Capacitor(s)
discharged to a
safe level.

S457 —

$S_{14} S_{12} S_{21} S_{24} S_{32} S_{33}$ ON
$S_{WB} S_{11} S_{13}$ OFF
$S_{22} S_{23}$ OFF
$S_{31} S_{DIS}$ OFF

S458 —

Capacitor(s)
discharged to a
safe level.

# Fig. 4b

Fig. 5a

Fig. 5b

Fig. 5c

Fig. 5d

Fig. 5e

Fig. 7

Fig. 8

Fig. 9

T1b'                    T4b

## Fig. 10a

T1b'                T3b T4b

## Fig. 10b

T3b

T1b'            T2b    T4b

## Fig. 10c

T1b'

## Fig. 10d

T1b'

T1b

## Fig. 10e

Europäisches
Patentamt

European
Patent Office

Office européen
des brevets

## EUROPEAN SEARCH REPORT

**Application Number**

EP 09 15 8623

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 469 569 B1 (FUMIAKI MIYAMITSU) 22 October 2002 (2002-10-22) * abstract * * figures 8,9 * * column 3, line 32 - line 42 * * column 4, line 45 - line 59 * * column 4, line 65 - column 5, line 5 * * column 11, line 56 - line 67 * * column 12, line 7 - line 15 * ----- | 1-13 | INV. H02M3/07 |
| X | US 2007/285150 A1 (EMMANUEL RACAPE) 13 December 2007 (2007-12-13) * abstract * * figures 7,8 * * paragraphs [0004], [0007], [0041] - [0043] * ----- | 1-13 | |
| X | US 6 100 752 A (MAY LEE ET AL.) 8 August 2000 (2000-08-08) * abstract * * figure 3a * * column 2, line 46 - line 58 * ----- | 1-13 | TECHNICAL FIELDS SEARCHED (IPC) H02M |
| X | US 5 481 447 A (HUBERTUS A. CARIS ET AL.) 2 January 1996 (1996-01-02) * figures 1,2 * * column 2, line 36 - line 39 * * column 5, line 24 - line 40 * ----- | 1-13 | |

The present search report has been drawn up for all claims

| Place of search | Date of completion of the search | Examiner |
|---|---|---|
| The Hague | 25 June 2009 | Lund, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 15 8623

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2009

| Patent document cited in search report | | Publication date | Patent family member(s) | | Publication date |
|---|---|---|---|---|---|
| US 6469569 | B1 | 22-10-2002 | JP | 2001069747 A | 16-03-2001 |
| US 2007285150 | A1 | 13-12-2007 | CN | 101460903 A | 17-06-2009 |
| | | | DE | 112007001308 T5 | 16-04-2009 |
| | | | WO | 2007146002 A2 | 21-12-2007 |
| US 6100752 | A | 08-08-2000 | EP | 0902525 A2 | 17-03-1999 |
| | | | JP | 11164545 A | 18-06-1999 |
| US 5481447 | A | 02-01-1996 | NONE | | |

EPO FORM P0459

For more details about this annex : see Official Journal of the European Patent Office, No. 12/82